# EUROPEAN PATENT SPECIFICATION

(11) **EP 2 993 410 B1**
(45) Date of publication and mention of the grant of the patent: **20.02.2019**
(21) Application number: 14199081.2
(22) Date of filing: 19.12.2014
(51) Int. Cl.: F24C 7/08, A47J 37/00, H05B 6/64, H05B 1/02, A47J 37/12

(54) **Method and temperature control arrangement for electrical heating of a food**
Verfahren und Temperatursteuerungsanordnung zum elektrischen Aufwärmen eines Lebensmittels
Procédé et dispositif de régulation de température pour le chauffage électrique d'un aliment

(30) Priority: 02.09.2014 EP 14183283
(43) Date of publication of application: 09.03.2016
(73) Proprietor: Electrolux Appliances Aktiebolag, 105 45 Stockholm (SE)
(72) Inventor: Junkersfeld, Markus, 91541 Rothenburg ob der Tauber (DE); Schirmer, Stefan, 91541 Rothenburg ob der Tauber (DE)
(74) Representative: Electrolux Group Patents

(56) References cited:
- EP-A1- 2 110 605
- EP-A2- 2 042 809
- US-A- 4 447 693
- US-A1- 2008 213 449

## Description

The present invention relates to a method for electrical heating of food. Further, the present invention relates to a temperature control arrangement for electric heating of food in a cavity of a domestic appliance, wherein said temperature control arrangement has implemented the method mentioned above.

In recent times, the awareness has increased that resources are limited. Increasing oil and electricity prices motivate the consumer to buy energy-saving devices. Concerning household appliances, such as kitchen appliances, energy can be predominantly saved in such devices where electrical heating is used. Usually, electrical heating accounts for more energy consumption than powering engines and pumps. To stay market-competitive, it becomes more and more important for the manufacturers of kitchen appliances to offer household appliances that consume less energy. Energy can thus be saved with appliances, such as kitchen ovens that per se consume high power, e.g. a kitchen oven with various heating elements can easily account for 3 kW.

Modern household appliances, such as kitchen appliances, ovens and hobs, are subject to constant innovation. In the presence of high real estate prices, and more confined living environments as well as in view of the rapid depletion of natural resources, energy efficiency and optimum construction are a prerogative. In particular, household appliances making use of electrical heaters are a source of high energy consumption and thus provide a good target to optimize the power efficiency in a household.

Further, in view of a multitude of activities as a consequence of modern lifestyle, time efficiency is also of concern. Thus, in order to save time and to allow for sophisticated food preparation, stronger heating elements in larger numbers are employed in modern kitchen ovens.

Document DE 40 29 181 A1, "Heating of Ovens", discloses to use all heating elements during a first heat-up phase to bring an oven to a set temperature using the maximum available heating capacity. Further then, in a second phase, a duty cycle is maintained that corresponds to a temperature to be maintained. In case the temperature reaches a lower temperature threshold, the maximum heating power is switched on again.

Document EP 2110605 A1, "Cooking Method", is about improving cooking results when starting from an ambient temperature. The solution proposes to manage different duty cycles for upper and lower heating elements. As it has been found out that food may burn during the first heat-up phase when using all heating elements at maximum power, a food detection is proposed based on a heat-up delay that is measured, which causes the pre-heat process not to be applied.

The document GB 451329 A1, "Improvements in or relating to Temperature Control Systems" deals with providing a temperature control system for controlling the energization of an electric heating element associated with a cooking chamber in such a manner as to obtain a momentary peak temperature in the cooking chamber and thereafter a desired lower maintained temperature level in the cooking chamber. A solution is proposed where a pair of thermostatic switches is connected in parallel with each and controlling the energization of the heating element. Both of the thermostatic switches operate in a different temperature range.

US 2008/0213449 A1 discloses a device for heating food including a housing and a plurality of heated shelves or trays supported on said housing. Each tray comprises a heater and a temperature sensor. A controller operates the heater as a function of the temperature on the surface of the tray. The presence of food is detected by a sensor. The mass of the food on the tray is measured by a strain gauge.
EP 2 042 809 A2 discloses a method of programming a cooking oven. During the heating-up phase the behavior of the increasing temperature allows conclusions of the amount of food inside the oven cavity. The further cooking process depends on the amount of food. The temperature, the velocity of the fan and the humidity are adapted to the amount of food.

US 4,447,693 discloses a power controlled microwave oven. The average input power is sensed. The power absorbed by the food is determined by a microcontroller. The user enters the amount of food and a code indicating the food's category. The power of the magnetron is maximum during an initial cycle and reduced during a further cycle.

The invention is based on the problem to improve the power efficiency of a kitchen oven.

This problem is solved by the invention by a method for electrical heating of food according to claim 1, a temperature control arrangement according to claim 7, a household appliance according to claim 13 and a method for controlling a household appliance according to claim 14.

Further developments of the invention are given in the dependent claims.

Advantageously, according to an embodiment of the temperature control arrangement according to the present invention, control mechanisms are combined during heating, a thermostatic control of the temperature range to be maintained as well as a duty cycle power control which provides a duty cycle independence of a load to be heated are used. In this manner, only the amount of power is provided that is actually needed to heat the food amount present in the oven, respectively maintain it at a certain cooking temperature. On the other hand, temperature control is still thermostatically maintained in case the oven door is opened or for other reasons the duty cycle power control leads to an underrun, respectively overshooting of a desired temperature optimum for cooking.

Beneficially, the temperature control arrangement according to this embodiment of the present invention works with single heating elements as well as with plural heating elements by respectively either duty or multi-cycle power control; and beneficially in the case of controlling plural heating elements allowing to individually switch the heating elements and control the power of the heating elements being switched on in dependency of the food load determined or entered as well as the power required for heating the food to the food preparation temperature.

Favorably, according to a further development of an embodiment of the arrangement according to the present invention, the food mass can be entered by a food mass input means in order to be able to appropriately determine the duty cycle that is required to heat the corresponding food mass.

Beneficially, according to a further development of an embodiment of the arrangement according to the present invention, the food mass input means is constructed in the form of a scale. Favorably, such an implementation relieves the operator from the duty to manually input the food mass, and instead automatically determines the weight of the food inside of the oven, which can then be used by the duty cycle power control to determine the appropriate duty cycle.

Advantageously, such a scale can be integrated within the oven and be operated in an initial phase when the oven is started to determine the weight of the food in order to determine the load present in the oven.

Beneficially, according to a further development of an embodiment of the arrangement according to the present invention, it comprises means for evaluating the thermal inertia of the food to be heated in order to be able to determine the load inside of the oven. Such a means beneficially allows it to automatically determine the load with minimum additional devices/components required; and in particular allows it to automate the cooking or baking process as much as possible while requiring a minimum of user intervention.

Advantageously, according to a further development of an embodiment of the arrangement according to the present invention, a control power value is determined in dependency of the food mass/thermal inertia. In this manner, beneficially, the duty cycle power control can be directly instructed to adapt the proper duty cycle corresponding to the load inside of the oven without requiring additional measures.

Advantageously, according to a further development of an embodiment of the arrangement according to the present invention, a control power value corresponds to the food mass/thermal inertia in a way that it is dependent in a mathematical function, e.g. proportional or inverse proportional to the load, respectively food mass.

Preferably, according to a further development of an embodiment of the arrangement according to the present invention, a thermometer and a clock are provided in order to determine a temperature-over-time behavior as a measure to determine the thermal inertia. In this manner, a minimum installation is required in order to deliver proper results and automatic control of the duty cycle corresponding to the load inside of the oven for the duty cycle power control.

Favorably, according to a further development of an embodiment of the arrangement according to the present invention, an inclination angle of a temperature-over-time linear slope is determined as a measure for the temperature-over-time behavior. Such an angle can be beneficially used as a parameter to determine a proper control power value for the duty cycle power control.

Favorably, according to a further development of an embodiment of the arrangement according to the present invention, the load evaluation unit is adapted to provide a lower power value for a larger inclination angle. In an easy fashion, the control power value can be determined in a correct way, and if the oven heats faster, this will lead to a larger inclination angle and thus be indicative of a lower food mass.

Beneficially, according to a further development of an embodiment of the arrangement according to the present invention, the load evaluation unit is adapted to set a 100% duty cycle once an inclination angle is determined that corresponds to a 3 kg food mass corresponding to a respective load inside of the oven. Usually, it has been found that from such a mass onward, the full heating power is required in order to keep the appropriate temperature inside the oven.

Advantageously, an embodiment of the method according to the present invention provides for a power-efficient heating and cooking of the food while using temperature control and subsequently duty cycle power control depending on the load of the food to be heated, while on the other hand controlling the temperature range to be maintained by the duty cycle power control. In this manner, power is only used as required by the load in the oven, while at the same time a temperature band suitable for optimal cooking or baking of the food can be maintained. On the other hand, the number of devices/installations required in the oven is kept at a minimum increasing the reliability of the oven.

The method for the electrical heating of food according to this embodiment the present invention is beneficially suitable to operate with a single or plural heating elements by applying either duty-cycle power control for a single heating element or multi-cycle power control for plural heating elements. Beneficially, plural control possibilities are provided in either switching the number of heating elements and controlling the duty cycle of the respective heating elements as well in dependency of the food mass and the predetermined food preparation temperature. In this manner, energy can be saved without sacrificing the quality of the cooking or baking results.

Beneficially, according to a further development of the method according to the present invention, the food load can automatically be determined or be entered by a user, thus providing optimum flexibility in operation and also a simple way of manufacturing and construction.

Advantageously, according to a further development of an embodiment of the method according to the present invention, the number of plural heating elements comprises two, as two heating elements in most cases are sufficient and can be controlled in a technical efficient manner, while at the same time saving energy and cost.

Beneficially, according to a further development of an embodiment of the method according to the present invention, the predetermined food preparation temperature is substantially the same as the heat-up temperature within a certain range, beneficially in +/- 5°C or +/- 2°C, or being identical. In this manner, an efficient energy consumption can be combined with a simple technique for control and the provision of optimum cooking or baking results.

Advantageously, according to a further development of an embodiment of the method according to the present invention, a two-stage power control can be applied by in a first stage switching the number of heating elements according to the power required for heating the food; and in a second stage controlling the number of activated heating elements by a multi-cycle power control. Beneficially, this control is done by an oscillating relay whose opening- respectively closing time corresponds to the duty cycle desired depending on the circuitry being used.

Advantageously, according to a further embodiment of the method according to the present invention, a temperature control element is beneficially arranged in series to either a single heating element or plural heating elements in order to provide an optimum circuit design with a minimum number of parts and efficient operation.

Favorably, according to a further development of an embodiment of the method according to the present invention, a lower mass is associated to a lower duty cycle. In this manner, it is taken into account that a lower mass requires less energy to be heated while at the same time also requires less intermittent exposure to heat in order to maintain a certain temperature, which is adapted by the duty cycle power control operating at a lower duty cycle once a lower load is present inside of the oven.

Beneficially, according to a further development of an embodiment of the method according to the present invention, the corresponding duty cycle is determined by a temperature-over-time behavior of the oven temperature. In this manner, without requiring additional installations, as a clock and a temperature sensor are mostly available in present kitchen ovens, a load can be determined to be heated inside of the oven, because a higher mass of food, representing a higher load, will lead to a higher heat-up delay of the oven, a fact that can be exploited to adjust the duty cycle power control appropriately to the mass to be heated.

Advantageously, according to an embodiment of the household appliance according to the present invention, this comprises a temperature control arrangement according to the present invention, because such a temperature control arrangement optimally controls the power use of a household appliance, respectively a kitchen oven, in such a manner that it only uses the minimum amount of power needed and required to appropriately heat the food inside the oven.

Beneficially, according to an embodiment of the method for controlling a household appliance according to the present invention, this comprises the method for the electrical heating of food according to the present invention. This method is optimally suitable for the electrical heating of food making use of a duty cycle power control, which duty cycle is adapted to the load inside of the oven. Thus, an optimum power efficiency is guaranteed by such a method.

Advantageously, the temperature control arrangement according to an embodiment of the present invention combines the benefits of a e.g. traditional simple heat-up switch with a duty cycle power control, that allows smooth adaptation of the power submitted to the heating element as a response to the food amount in the oven with the security of a temperature control element that safeguards the operation of the duty cycle power control in a manner to at least control a maximum temperature under the influence of the duty cycle power control.

Preferably, according to a further development of an embodiment of the arrangement according to the present invention, an actuator is provided that ensures that a heat-up switch is only switching once during a cooking cycle. This means that once a certain temperature is reached, the heat-up switch stays open and leaves the power control to the duty cycle power control for the present heating operation and only takes its closed state again once a new heating operation is started. This is usually the case after the food has been prepared and the heating element been switched off totally and cooled down.

Favorably, according to a further development of en embodiment of the arrangement according to the present invention, the actuator is provided in the temperature control element. Beneficially, to use the temperature control element for two purposes, the one is to control the duty cycle power control and the other to actuate, meaning to switch off the heat-up switch once a certain heat-up temperature is reached. Thus, costs and parts can be saved.

Beneficially, according to a further development of an embodiment of the arrangement according to the present invention, the heat-up switch comprises an actuator to switch it off, which allows for more flexibility in design of the temperature- and power control and has further advantages in terms of reliability and maintenance, as the failure of one part only relates to functions of this part alone.

Advantageously, according to a further development of an embodiment of the arrangement according to the present invention, only a single heating element is present, which allows for a compact design and saves parts as well as is also made feasible by the sophisticated duty cycle power control that allows to operate large capacity heating elements in a power-efficient manner.

Favorably, according to a further development of an embodiment of the arrangement according to the present invention, a duty cycle power adjuster is provided which allows it to adapt the duty cycle of the duty cycle power control to the current heating conditions and thus provides for optimization of power control in view of the present heating conditions, respectively oven status.

Advantageously, according to a further development of an embodiment of the arrangement according to the present invention, the duty cycle can be adapted to the mass of the food to be cooked. Thus, the power efficiency can be maintained by adapting an individual power amount to a particular food amount to be heated.

Favorably, according to a further development of an embodiment of the arrangement according to the present invention, the food mass can be determined automatically by means of a scale and directly be converted into a duty cycle. Thus, it is not required that the user determines the mass and in a complicated and error-prone manner has to input it via a keyboard, a touchscreen input or the like.

Advantageously, according to a further development of an embodiment of the arrangement according to the present invention, the food mass representing the heating load can be determined on the basis of known heating parameters of the heating element by measuring a temperature curve over time during a heat-up with maximum heating power and comparing such a curve with the one of an empty oven allowing to deduce the mass of the food inside the oven based on the differences in the two curves.

Advantageously, an embodiment of the method for the electric heating of food according to the present invention only requires a minimum number of steps to heat up food in a power-efficient and secure manner by heating up quickly, until a heat-up temperature is reached, switching to a power-efficient duty cycle power control and in addition securing the transgression of at least a maximum temperature by a temperature control element that controls the temperature behavior of the duty cycle power control. In this way, a sophisticated power-efficient and technically not too complicated power control for electric heating of food can be facilitated.

Beneficially, according to a further development of an embodiment of the method according to the present invention, the duty cycle is adjusted according to a thermal load represented by the food. In this manner, only a minimum amount of power needs to be provided in order to reliably heat the food.

Advantageously, according to a further development of an embodiment of the method according to the present invention, the duty cycle is proportional to the amount of food, meaning a lower amount of food needs a lower duty cycle and a higher amount of food needs a higher duty cycle. Depending on a total heating capacity of the heating element at a certain food mass, representing a certain load, a duty cycle lower than 100% is no more reasonable, as e.g. above a food mass of 3 kg, a total available heating power is required.

Beneficially, according to a further development of an embodiment of the method according to the present invention, the food mass can be indirectly determined from a temperature heating behavior when the food is heated from a cold state. Initially under maximum power by measuring the temperature over time and comparing this temperature-over-time curve with a temperature-over-time curve that has been measured when heating an empty oven under the same conditions.

Advantageously, an embodiment of the household appliance according to the present invention contains a temperature control arrangement according to the present invention. In this manner, a power-efficient household appliance can be provided that saves time during cooking and at the same time saves power as well is providing a competitive advantage.

Advantageously, the method for controlling the household appliance according to an embodiment of the present invention makes use of the method for controlling the heating of food according to the present invention and thus provides a power-efficient method to operate a household appliance which is attractive in the eye of the potential customers as it saves money and time.

Subsequently, the invention will further be explained on the basis of embodiments and examples shown in drawings, wherein:
- Fig. 1: shows a basic configuration of an embodiment of a temperature control arrangement;
- Fig. 2: shows an embodiment of an oven;
- Fig. 3: shows an embodiment of a method for the electrical heating of food;
- Fig. 4: shows an example for a temperature-over-time behavior of an oven;
- Fig. 5 to 7: show different temperature-over-time behaviors;
- Fig. 8: shows a basic configuration of another embodiment of a temperature control arrangement;
- Fig. 9: shows a basic schematic of a temperature control arrangement for electric heating of food according to another embodiment of the present invention;
- Fig. 10: shows a method for heating food according to an embodiment of the present invention
- Fig. 11: shows another basic schematic of a temperature control arrangement for electric heating of food according to another embodiment of the present invention;
- Fig. 12: shows another basic configuration of an embodiment of a temperature control arrangement; and
- Fig. 13: shows another basic configuration of another embodiment of a temperature control arrangement;

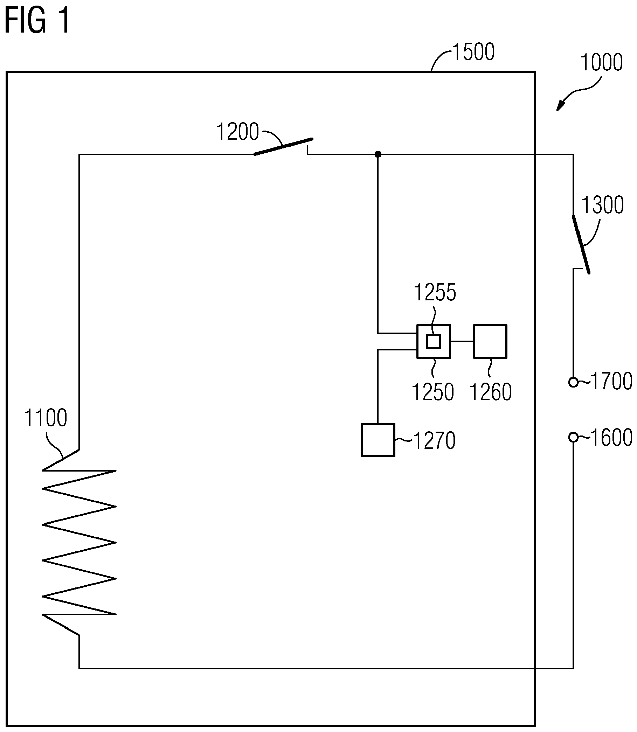

As Fig. 1 shows in a preferred embodiment, a basic temperature control arrangement may comprise parts in the kitchen oven 1500 such as a heating element 1100, which may be comprised of an upper heating element and a lower heating element; and may also be constructed as a circular heating element established with a fan to distribute the heat in the oven. As further can be seen a power supply 1700 and 1600 of the arrangement 1000 is present.

The drawing further shows a duty cycle power control 1200 and a thermostatic temperature control 1300 which are connected in series to each other and to the heating element 1100 and to the power supply 1700, 1600. Further, a duty cycle adjuster 1250 is shown that is coupled to the duty cycle power control 1200 and is further connected to a thermometer 1260 and to a timer 1270. The duty cycle adjuster 1250 also comprises a load evaluation unit 1255. The load evaluation unit is adapted to generate a control power value for the duty cycle power control on the basis of a thermal inertia that is determined with the thermometer and the timer measuring the heat-up time of the oven under certain frame parameters. It may comprise a table that is stored in a memory which stores certain frame parameters for an empty oven and the heat-up time for these frame parameters.

Further, it may comprise reference data in a memory for certain loads, e.g. 1 kg, 1 pound, 2 kg and so forth, and the associated heat-up time corresponding to a certain heat-up temperature. The frame parameters may be selected to conform to certain suitable cooking temperatures.

Generally, beneficially, the heating should be started at basically room temperature. The heat-up time in comparison to the heat-up time of an empty oven leads to a certain delay until a certain frame parameter temperature is reached which corresponds to the load that is present in form of a food to be heated in the oven. As such, e.g. the inclination angle of a temperature-over-time linear slope is indicative of the load present in the oven, e.g. in ovens present on the market, e.g. a heating capacity of 3 kW is present in form of electric heating elements in the oven. As such, if the load in the oven corresponds to a mass of 3 kg of food, then it has been found by the applicant this should go along with a duty cycle of 100%. On the other hand, due to thermal losses in form of radiation and conduction and convection, it is expected that a duty cycle corresponding to 1.5 kg of food inside the oven is not 50%, but rather 70%, and the one of 1 kg more close to 45%.

Advantageously, during a heat-up phase, the switch of the e.g. thermostat 1300 is closed and the heater is directly connected to the power supply 1700, 1600. Later, once the heat-up temperature is reached, the duty cycle power control 1200 becomes active and controls the power supply to the heating element 1100 with a duty cycle corresponding to the load inside the oven as explained above.

Preferably the heat up temperature value may be e.g. a fixed value set as 180°C or e.g. as 160°C.

Further, e.g. the duty cycle power control 1200 may mimic a simple temperature control element that safeguards a certain temperature range, in particular a certain upper temperature, under operation of the duty cycle power control. Such a temperature control element may e.g. be behave like a capillary tube actuator that e.g. may serve as a controller that limits the upper temperature in order to prevent scorching of the food to be heated.
The temperature control element will e.g. only be activated once the heat-up switch 1300 has opened. Beneficially such a temperature control element maybe designed in hardware firmware or software.

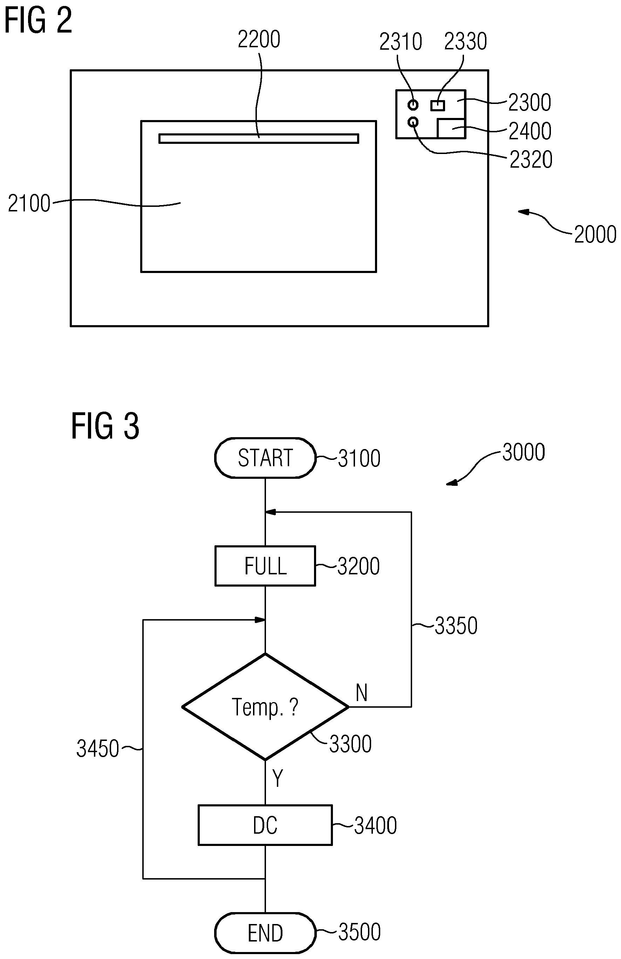

As Fig. 2 shows, a household appliance 2000 in the form of a kitchen oven comprises a door closing a cooking cavity 2100 with a handle 2200. Further, a control panel is shown that comprises mass input means 2310, 2320 and an indication 2330. Further, a controller may be provided 2400, which may contain the duty cycle power adjuster. By means of the control panel, the user may activate a cooking program and may input a food mass by means of input keys 2310 and 2320. An indication may be given 2330 as to which temperature is currently present, if a preheat process is run, and as to which mass is detected inside of the oven, or which duty cycle is run, e.g. 60%, giving the user an indication of how much power is saved with the household appliance.

The household appliance 2000 may contain a scale, not shown in the drawing. The scale may measure the weight of the food and provide the information to the load evaluation unit 1255. On the other hand, by means of a temperature sensor and a timer, the temperature-over-time behavior of the oven that is heated may be determined in order to determine a load that is present inside of the oven and adjust the duty cycle appropriately.

Beneficially, a load corresponding to 3 kg corresponds to a duty cycle of 100%, and a lower load corresponds to a lower duty cycle, e.g. a load of 1.5 kg does not correspond to a duty cycle of 50%, but rather to a duty cycle of 70% due to the non-linear behavior of the heater, thermal losses and thermal radiation and so forth.

Fig. 3 shows a preferred embodiment of a method according to the present invention 3000. Starting at 3100, the oven is heated with full power 3200. At 3300, an inquiry is performed as to which temperature is reached, is the temperature at the heat-up temperature, then, in the yes case, the duty cycle power control is activated operating the heater with a duty cycle that corresponds to the load inside of the oven. It is branched back in front of the inquiry 3450, where within a loop the temperature is controlled. Once the temperature is not satisfying a temperature criterion that is questioned inside of the inquiry 3300 it is branched back after the start 3350; and full heating power is activated. This branching back can either be done by closing the thermostatic control 1300, or by instructing the duty cycle power adjuster by means of the temperature control element 1300 to heat at full duty cycle 100%, until the temperature has reached a predefined temperature again and the duty cycle power control 3400 can be adapted to further control the cooking process.

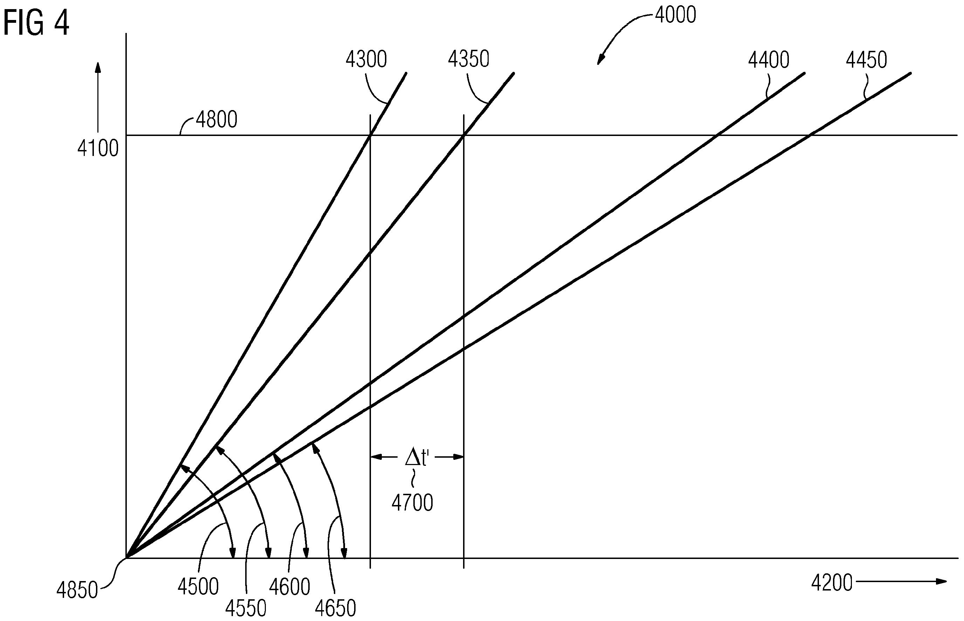

Fig. 4 shows an example of a temperature-over-time behavior. In this case, temperature-over-time linear slopes 4300, 4350, 4400 and 4450 are shown. The diagram 4000 shows a temperature 4100 over time 4200. Further, inclination angles 4500, 4550, 4600 and 4650 are shown. On the other hand, a time delay 4700 is also shown.

Beneficially, an empty oven is heated up, demonstrating a temperature-over-time behavior 4300 associated to an inclination angle 4500. In this case, frame parameters are the ambient temperature 4850 and the heat-up temperature 4800. On the other hand, any other temperatures as frame parameters can be used, e.g. such a temperature-over-time behavior may be stored inside the load evaluation unit 1255. At 4350, e.g. a temperature-over-time behavior corresponding to an inclination angle 4550 corresponding to a certain load in the oven is shown, e.g. this load may be 1 kg. This load is associated to an inclination angle 4550. In this case, this may correspond to a duty cycle of 60%. On the other hand, at 4400, a higher load, e.g. meaning a roast being in the oven, is heated which corresponds to an inclination angle of 4600 and a temperature-over-time behavior 4400.

Further, a time delay between an empty oven and a 1 kg load 4700 is also shown. As the inclination angle, this time delay is also indicative of the load and can be used to adjust the duty cycle power control. Under 4400, most probably the duty cycle will already be at 80% corresponding to a load of a food mass of 2 kg to 2.5 kg.

Further, at 4450, e.g. a food mass of 3 kg is heated that corresponds to an inclination angle of 4650. Such a food mass heated in a common kitchen oven having a heating power of 3 kW corresponds to e.g. a 100% duty cycle, as with such a high mass, the full heating power is needed to keep the mass at a predetermined cooking temperature. Experimental data can be acquired corresponding to various loads in the oven and to various frame parameters to build a table of food masses, loads, frame parameters /temperatures and inclination angles. Such a table can then be consulted during operation, to get for an associated inclination angle or a time delay at a certain stage of the cooking process a corresponding duty cycle value.

As can also be seen, the lower the inclination angle is, the higher the duty cycle is to be selected. Conventionally, thermal processes are non-linear, and as such the dependency of duty cycle and load inside the oven will be non-linear.

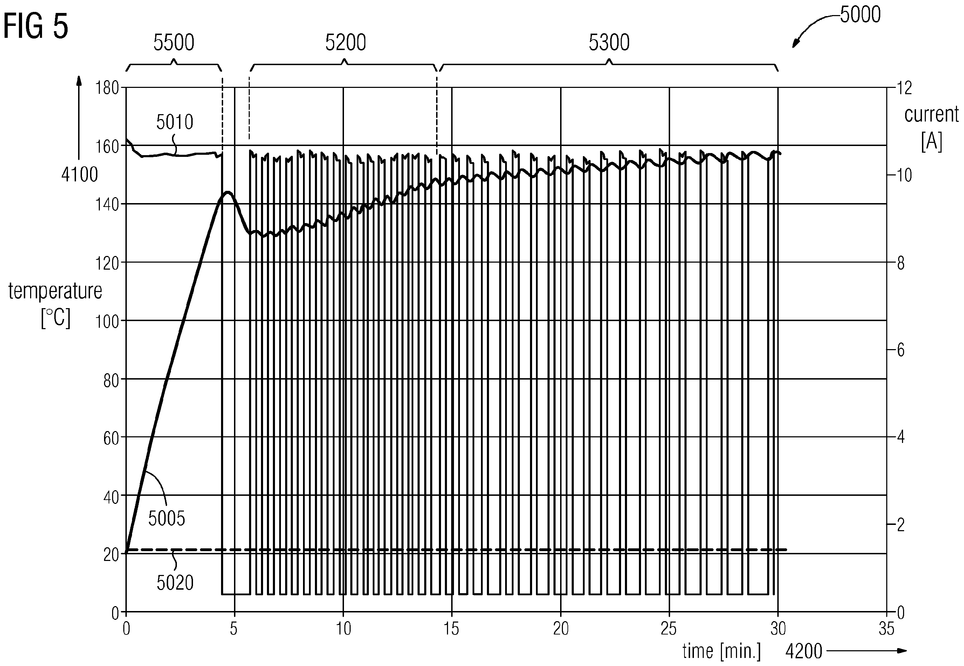

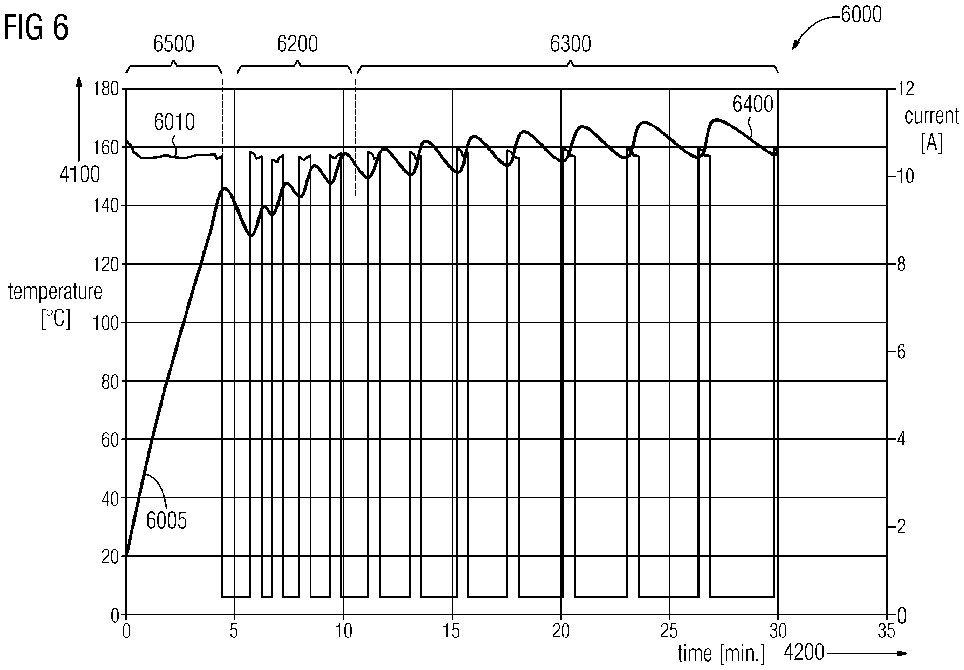

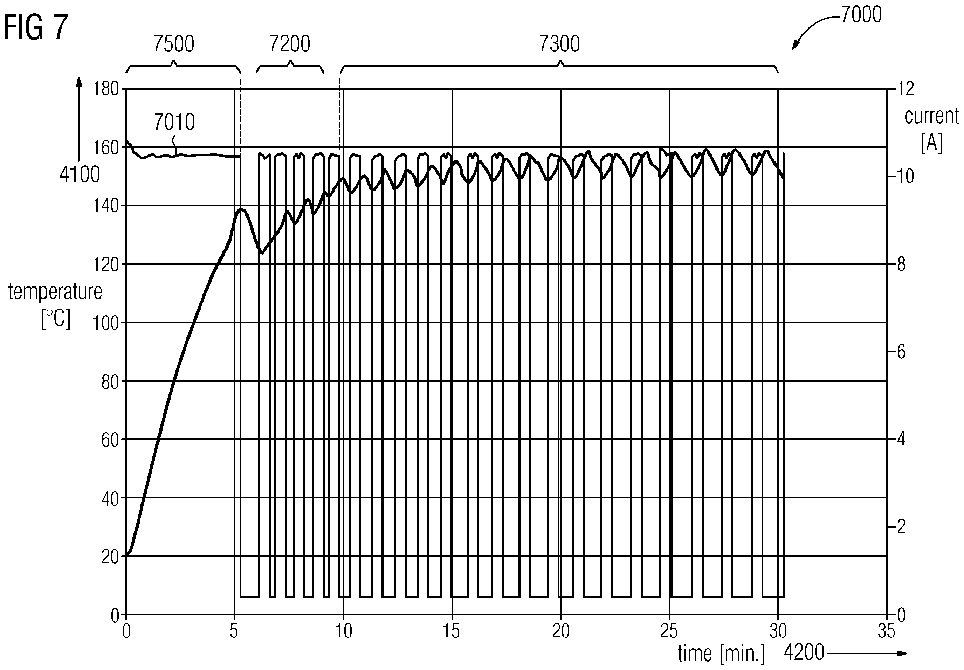

Fig. 5 to 7 show different temperature-over-time behaviors. Fig. 5 indicated by 5000 shows the operation of an oven under a small load. Fig. 6 indicated by reference 6000 shows an operation of the oven under a small load with higher heating power, and Fig. 7 indicated by 7000 shows the operation of an oven under a heavy load, such as for instance when a pork roast is prepared. The other cases referenced by 5000 and 6000 may be indicating the baking of cookies.

Reference 5020 is indicative of the room temperature. References 5005, respectively 6005, respectively 7005 indicate the electric current, whereas the intervals 5200, respectively 6200, respectively 7200 indicate an initial heat-up phase following the reaching of the set temperature, and the intervals 5300, 6300 and 7300 are indicative of a cooking phase where the temperature is maintained.

Further, heat-up times 5500, 6500 and 7500 are shown. The heat-up times are indicative of a speed of heat-up in the oven in the presence of different loads. Those times can serve to determine the load itself, as the further conditions of the oven like temperature behavior can be determined without the load and then compared with the behavior under a load.

It is shown that in the presence of a small load, the heat-up goes speedier 5300 than in the presence of a high load indicated by 7500.

When comparing the two diagrams in Fig. 5 and 6, where at 5000 a smaller heating power is used and at 6000 a higher heating power is used, it can be determined that the duty cycle under higher power is much smaller than under lower power. This can also be optically determined in that in the intervals 5200 and 5300 more "power on" phases are shown than in the intervals 6200 and 6400.

On the other hand, it can be also determined from the representation in Fig. 6 that higher power leads to higher temperature overshooting, which is depicted by the peaks in Fig. 6. One of them, as an example, is referenced by 6400.

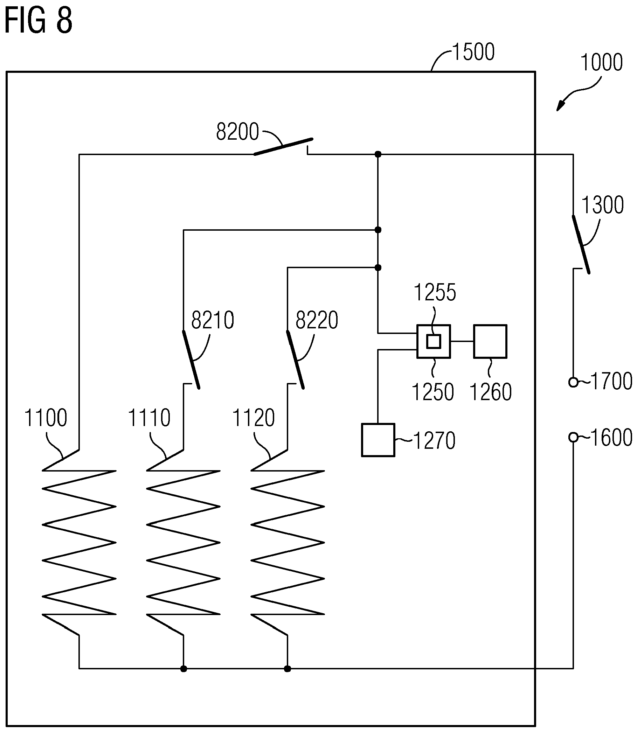

As Fig. 8 shows, a further embodiment of a basic configuration of a temperature control arrangement can adapt to plural heating elements. In this case, the plural heating elements are controlled with a multi-cycle power control 8200, 8210 and 8220. The plural heating elements are identified by 1100, 1110 and 1120.

In an advantageous manner, in dependency of a food load that is either automatically determined or input by a user, the number of heating elements can be switched according to the power required for heating the food to a predetermined food preparation temperature and maintaining this temperature. In this manner, it is not always required to switch on all of the heating elements.

In a beneficial manner, heating elements that are activated can be controlled by the multi-cycle power control 8200, 8210 and 8220. Such a multi-cycle power control may, for instance, operate a relay that switches the heating elements on for a certain amount of time depending on the power required to maintain the food preparation temperature. Beneficially, the e.g. individually activated heating elements 1100, 1110 and 1120 can be individually operated at a different duty cycle as required to maintain a proper food preparation temperature.

Other than providing plural heating elements and a multi-cycle power control, the operation of the embodiment shown in Fig. 8 is much similar to the operation of the embodiment shown in Fig. 1.

Initially, for instance, the user sets a food load and sets a food preparation temperature. In some cases, it may be desirable to switch on all heating elements to arrive at the heat-up temperature as fast as possible. Then, however, depending on the food load that is either determined automatically or e.g. set by the user, an optimum number of heating elements may be kept activated and operated by the multi-cycle power control 8200, 8210 and 8220 in order to provide optimum cooking respectively baking results, while at the same time saving energy and securing an efficient operation of the heating arrangement.

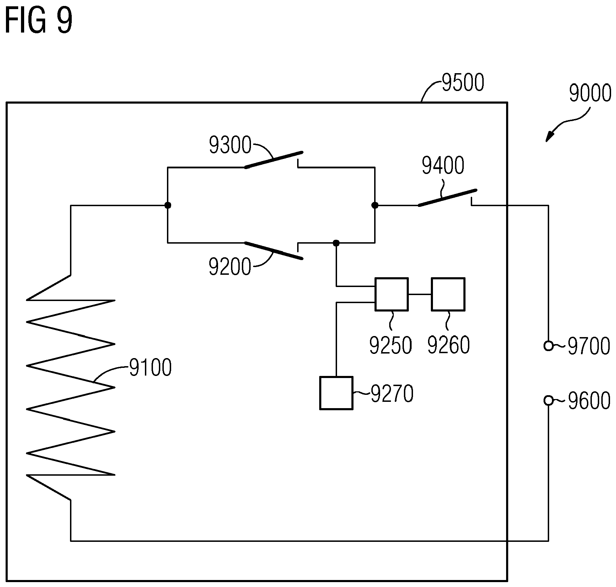

As Fig. 9 shows, a preferred embodiment of a temperature control arrangement 9000 predominantly contains parts to effect temperature, to measure temperature and to control temperature. An oven cavity 9500 is shown, and a power supply 9700 and 9600. Further, a heating element 9100 is shown which may consist of a single heating element or plural heating elements that can be switched according to the heating amount required to heat a certain amount of food, meaning there could be heating elements of different power and different capacity that can be used in an energy-efficient manner to heat up a certain amount of food.

Here, a heat-up switch 9300 is shown that during an initial heat-up of the oven safeguards that the oven reaches a heat-up temperature in a fast manner. In this phase heat-up switch 9300 stays closed. Once this temperature is reached, the heat-up switch is opened, e.g. by an actuator, and hands over power control to a duty cycle power control 9200, which is connected in parallel to the heating element 9100. Preferably the heat up temperature value may be e.g. a fixed value set as 180°C or e.g. as 160°C. By opening of heat-up switch 9300 a serial circuit of a temperature control element 9400 and the duty cycle power control 9200 is formed.

Further, the temperature control element 9400 shown safeguards a certain temperature range, in particular a certain upper temperature, under operation of the duty cycle power control, and is connected between the power supply 9700 and the duty cycle power control 9200 as well as the heat-up switch 9300. During the heat up when heat-up switch 9300 is closed the operation of the duty cycle power control 9200 is without effect. It is also conceivable that the temperature control element 9400 switches at a lower temperature as the heat-up switch 9300.

The duty cycle power control 9200 adjusts the delivered power respectively the On-/ Off- times of the duty cycle. The delivered power respectively the On-/ Off- times of the duty cycle preferably are dependent on the load present to be heated, e.g. the food mass. The duty cycle power control 9200 may preferably be designed as ID-controller.

The temperature control element 9400 may e.g. be designed as a capillary tube actuator that e.g. may serve as a controller that limits the upper temperature in order to prevent scorching of the food to be heated.

Under these conditions, the temperature control element will e.g. only be switched on once the heat-up switch has been switched off. It is thus also conceivable that the temperature control element and the duty cycle power control are connected in parallel to the heat-up switch.

Further, a duty cycle adjuster 9250 is shown that is connected to the duty cycle power control 9200, which is in return connected to a thermometer 9260 and a timer 9270 that allow the measuring of a temperature behavior over time during a heat-up with food in the oven, and compare it with the temperature-over-time behavior of an empty oven and thus allow to determine the mass of food present in the oven on the basis of its added load and its effect on the thermal inertia of a heating system. The applicant has found out that energy can be saved in that way by adapting the duty cycle to the load.

A benefit of this circuit is also that energy can be saved as the heat up curve in form of temperature over time is flattened towards the target temperature in comparison to traditional solutions.

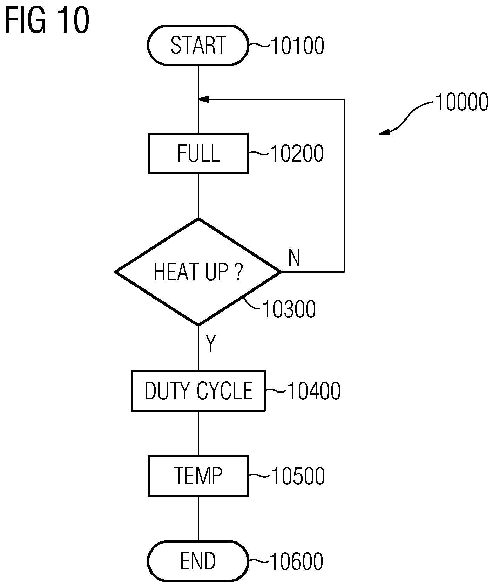

As Fig. 10 shows, a method for the electric heating of food according to another embodiment of the present invention 10000 starts initially at 10100 and heats up e.g. an oven with the full capacity of its heating element, respectively plural heating elements 10200, until a certain heat-up temperature is reached. This is evaluated at 10300, and once the heat-up temperature is not reached, a cycle is performed until the heat-up temperature which is predefined respectively adjustable is reached and the heat-up switch 9300 switches off. In this case, the duty cycle power control takes over at 10400 and adjusts the power supplied to the heating element according to a duty cycle which is higher for a higher food mass and lower for a lower food mass.

In this manner, the food can be heated in a power-efficient manner, and no power is wasted. In addition, while under duty cycle power control, the temperature is also controlled at 10500. If the temperature e.g. is too high, the heating process will be interrupted until while cooling down a certain allowed preset maximum temperature is reached and the duty cycle power control is switched on again. Once the food is heated according to a predetermined time schedule or another status of the food to be achieved, which e.g. can be measured optically or by means of probes, the method is ended at 10600.

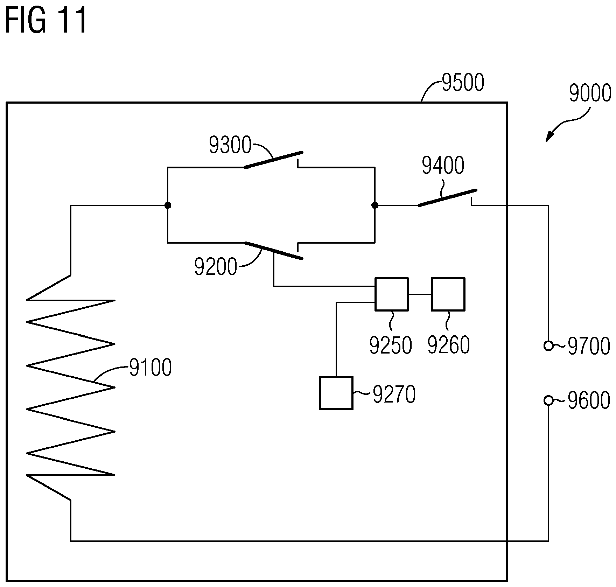

In an analogy to Fig. 9 Fig. 11 shows another embodiment of a temperature control arrangement 9000, which predominantly contains parts to effect temperature, to measure temperature and to control temperature.

For the general description of the configuration and the parts of Fig. 11 therefore Fig. 9 can be referenced. The same functional parts are designated by the same reference signs and the repeated description thereof is omitted.

The duty cycle power control 9200 adjusts the delivered power respectively the On-/ Off- times of the duty cycle.

The delivered power respectively the On-/ Off- times of the duty cycle preferably are dependent on the load present to be heated, e.g. the food mass. The duty cycle power control 9200 in this case operates preferably on an electromechanical basis.

An electromechanical design preferably comprises two switching elements arranged in parallel in one electrical circuit, such as a first and a second bimetal switching element. Both of them are preferably individually able to switch the heating current of the individual heating element 9100.

The first bimetal switching element is preferably adapted to interrupt the heating current based on its own increasing temperature during conducting it; and to close the heating current circuit again once it has cooled down during a subsequent interruption phase.
Beneficially the first bimetal switching element may be in addition controlled by a load evaluation unit which may be comprised in the duty cycle adjuster 9250. Namely the first bimetal switching element may be operated by the duty cycle adjuster 9250 in such a manner that it is kept switched on for a longer duration at a higher food load and is kept switched on for a shorter duration at a smaller food load.

For a modification of the switching duration of the first bimetal switching element the distance between its switching contacts maybe changed for instance. In particular at the first bimetal switching element the distance between its switching contacts maybe changed and adjusted by a motor under the control of the load evaluation unit.

The second bimetal switching element is preferably adapted to interrupt the heating current based on the increasing temperature in the oven cavity 9500; and after the subsequent interruption phase to close the heating current circuit again once the oven cavity 9500 has cooled down below a switching temperature.

Beneficially the second bimetal switching element is dependent on the temperature in the oven cavity and is independent from the load evaluation unit.

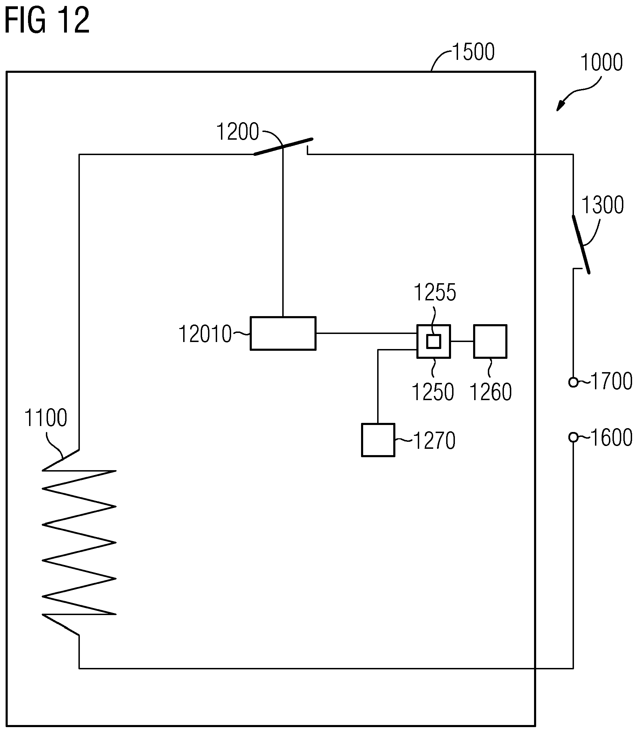

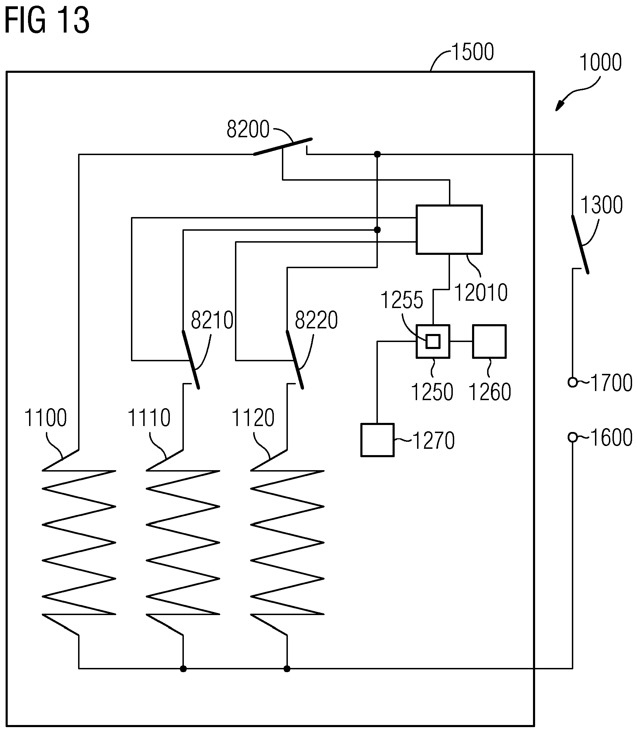

In an analogy to Fig. 1 Fig. 12 for a single heating element 1100 and in an analogy to Fig. 8 Fig. 13 for plural heating elements show another embodiment of a basic temperature control arrangement, which may comprise parts in the kitchen oven 1500 such as a heating element 1100, further heating element 1110 and heating element 1120, which may be comprised of an upper heating element and a lower heating element; and may also be constructed as a circular heating element established with a fan to distribute the heat in the oven. As further can be seen a power supply 1700 and 1600 of the arrangement 1000 is present.

For the general description of the configuration and the parts of Fig. 12 therefore Fig. 1 can be referenced. For the general description of the configuration and the parts of Fig. 13 therefore Fig. 8 can be referenced. The same functional parts are designated by the same reference signs and the repeated description thereof is omitted.

The drawings further show a duty cycle power control 1200 and a thermostatic temperature control 1300 which are connected in series to each other and to the heating element 1100 and to the power supply 1700, 1600.

Here the duty cycle power control 1200 is preferably operated electronically by use of a programmable electronic component or device such as a microprocessor or a controller 12010. Running preferably a dedicated program the component 12010, which controls a switching element, preferably for each present heating element 1100, 1110 and 1120 individually controls the "power on" time of the respective heating element 1100, 1110 and 1120. Beneficially a relays is used to switch the individual heating element 1100, 1110 and 1120. Beneficially a power requirement of each heating element 1100, 1110 and 1120 is stored to be accessible by and accessed by the program to respectively determine how long a respective heating element needs to be switched on regarding a specific individual power requirement.

For instance a first switching element switches on its respectively associated heating element 1100 in case the food load evaluation unit 1255 has determined a minimum load. In addition a second switching element switches on its respectively associated further heating element 1110 and/ or 1120 in case the food load evaluation unit 1255 has determined a respective higher load necessitating a higher power requirement and so forth.

Further, the problem can be solved advantageously by any one of the following embodiments:
A temperature control arrangement for electric heating of food, at least comprising:
- an electric heating element;
- a heat-up switch;
- a duty-cycle power control; and
- a temperature control element;
wherein the heat-up switch and the duty-cycle power control are connected in parallel to each other, and
in series with the electric heating element and the temperature control element.

The temperature control arrangement advantageously further comprises an actuator for switching off the heat-up switch at a predetermined heat-up temperature.

Advantageously the actuator is the temperature control element.

Advantageously the heat-up switch comprises the actuator.

Advantageously, the temperature control arrangement comprises a single heating element and/or
a duty cycle adjuster coupled to the duty cycle power control.

Further advantageously, a load input for inputting a mass related value of the food is comprised.

Further advantageously, the load input is a scale.

In particular a thermometer and a timer adapted to determine a temperature over time behavior as the mass related value is comprised.

The problem of the invention is also solved by a method for the electric heating of food, at least comprising:
- heating up food at a full heating capacity of a heating element until a heat-up temperature is reached;
- switching to a duty cycle power control to maintain a food preparation temperature;
- controlling a cavity temperature of a cavity where the food is heated with a temperature control element.

Advantageously, the duty cycle is adjusted according to a load represented by the food.

Further advantageously, a lower mass is associated to a lower duty cycle.

Advantageously, the duty cycle is determined from a temperature-over-time behavior.

Further advantageously, household appliance, especially a kitchen oven, comprising such a temperature control arrangement as described above.

Advantageously, a method for controlling a household appliance comprises a method for heating food as described above.

### List of reference numerals

- 1000: temperature control arrangement
- 1600, 1700: power supply
- 1500: oven cavity
- 1100, 1110, 1120: heating element
- 1200: duty cycle power control
- 8200, 8210, 8220: multi cycle power control
- 1300: thermostatic control
- 1260: thermometer
- 1270: timer
- 1255: load evaluation unit
- 1250: duty cycle adjuster

- 2000: kitchen oven
- 2100: cooking cavity
- 2200: handle
- 2300: control panel
- 2400: controller
- 2330: indication
- 2310, 2320: input keys

- 3000: method
- 3100: start
- 3200: full heating power
- 3300: temperature inquiry
- 3400: duty cycle power control
- 3500: end
- 3450, 3350: branching back

- 4000: Temperature-over-time behavior diagram
- 4100: temperature
- 4200: time
- 4800, 4850: temperatures
- 4300, 4350, 4400, 4450: different temperature-over-time behaviors in form of linear slopes
- 4700: time delay
- 4500, 4550, 4650, 4600: different inclination angles corresponding to the temperature-over-time behavior
- 5000, 6000, 7000: temperature-over-time diagrams under different loads/power conditions
- 5010, 6010, 7010: heat-up power
- 5005, 6005, 7005: electric current
- 5500, 6500, 7500: heat-up period
- 5200, 6200, 7200: first raise of high-duty cycle
- 5300, 6300, 7300: second phase of temperature maintenance with lower duty cycle
- 6400: peak temperature

- 9000: temperature control arrangement;
- 9100: heating element;
- 9200: duty cycle power control;
- 9300: heat-up switch;
- 9400: temperature control element;
- 9500: oven cavity;
- 9250: duty cycle adjuster
- 9260: thermometer
- 9270: timer
- 9600, 9700: power supply

- 10000: method for electric heating of food
- 10100: start
- 10200: full capacity heating
- 10300: heat-up temperature check
- 10400: duty cycle power control
- 10500: temperature control by temperature control element
- 10600: end
- 12010: microprocessor / controller

## Claims

1. A method (3000) for the electrical heating of food in a domestic appliance, at least comprising:
- heating up the food inside a cavity of the domestic appliance at a full heating capacity (3200) of a plurality of heating elements (1100, 1110, 1120) until a predetermined heat-up temperature of the cavity is reached;
- determining a food load of said food;
- switching (3400) to a multi-cycle power control (8200, 8210, 8220) for said plurality of heating elements (1100, 1110, 1120) to maintain a predetermined food preparation temperature (3300) of the cavity,
- wherein
a predetermined number of said plurality of heating elements (1100, 1110, 1120) that corresponds to said determined food load is activated by said multi-cycle power control (8200, 8210, 8220) and a duty cycle of said activated number of heating elements (1100,1110, 1120) is adjusted according to said determined food load by said multi-cycle power control (8200, 8210, 8220);
- controlling said predetermined food preparation temperature (3300) of the cavity (1500) with a thermostat (1300),
- the food load can be either set via user input (2310, 2320) or automatically determined during the heating up by determining and evaluating the time course of the temperature increase of at least one of the cavity (1500) and the food.

2. Method (3000) according to claim 1,
wherein the thermostat (1300) is arranged in series to said plurality of heating elements (1100, 1110, 1120).

3. Method (3000) according to claim 1, wherein
- the predetermined food preparation temperature is in the same range as said predetermined heat-up temperature; preferably plus- / minus 5°C, more preferably plus- / minus 2°C, most preferably the same;
- either of the heat-up temperature and the food preparation temperature, preferably both, can be set by the user.

4. Method (3000) according to any of the claims 1 to 3, wherein said multi-cycle power control (8200, 8210, 8220) controls a predetermined average power of said activated number of heating elements (1100, 1110, 1120) that corresponds to said determined food load,
preferably wherein said activated number of heating elements (1100, 1110, 1120) are arranged in parallel to each other and in series to the multi-cycle power control (8200, 8210, 8220)

5. Method (3000) according to any of the claims 1 to 4, wherein a lower mass is associated to a lower duty cycle.

6. Method (3000) according to any of the claims 1 to 5, wherein the duty cycle is determined from a temperature-over-time behavior (1250, 1260, 1270).

7. A temperature control arrangement (1000) for electric heating of food in a cavity (1500) of a domestic appliance, **characterized in that** said temperature control arrangement (1000) has implemented the method according to any one of the claims 1 to 6 and comprises at least:
- a plurality of electric heating elements (1100,1110, 1120) ;
- a multi-cycle power control (8200) for said plurality of electric heating elements (1100, 1110, 1120),
- a thermostat (1300);
- either an automatic load evaluation unit (1255) or a user-operable food load input device (2310, 2320),
wherein
- the thermostat (1300) and the multi-cycle power control (8200, 8210, 8220) are connected in series to each other, and in series with the plurality of electric heating elements (1100, 1110, 1120); and
- the respective automatic load evaluation unit (1255) or user-operable food load input device (2310, 2320 is connected to the multi-cycle power control (8200); and
- the multi-cycle power control (8200, 8210, 8220) is adapted to output power according to a control power value supplied from the load evaluation unit (1255).

8. The temperature control arrangement (1000) according to claim 8, wherein load evaluation unit comprises mass input means (2320) for the food mass to be heated.

9. The temperature control arrangement (1000) according to claim 7 or 8, wherein the mass input means (2320) comprises a scale, or wherein the load evaluation unit (1255) comprises means for evaluating a thermal inertia of the food to be heated, in particular wherein the load evaluation unit (1255) is adapted to provide a control power value in dependency of the food mass/ thermal inertia of the food, preferably wherein the load evaluation unit is adapted to provide a control power value corresponding to the food mass/ thermal inertia of the food to be heated.

10. The temperature control arrangement (1000) according to any one of the claims 7 to 9, further comprising a thermometer (1260) and a timer (1270) adapted to determine a temperature over time behavior.

11. The temperature control arrangement (1000) according to any one of the claims 7 to 10, wherein the load evaluation unit is adapted to determine an inclination angle (4550) of a temperature over time linear slope.

12. The temperature control arrangement (1000) according to any one of the claims 7 to 11, wherein the load evaluation unit is adapted to provide a lower control power value for a larger inclination angle, in particularly
wherein the inclination angle of a linear slope corresponding to a mass of 3 kg corresponds to a power value for a 100 % duty cycle.

13. A household appliance (2000), especially a kitchen oven, comprising a temperature control arrangement (1000) according to any one of the claims 7 to 12.

14. A method for controlling a household appliance (2000) comprising a method for electrical heating of food (3000) according to any one of the claims 1 to 6.

## Patentansprüche

1. Verfahren (3000) zum elektrischen Erwärmen eines Lebensmittels in einem Haushaltsgerät, mindestens Folgendes umfassend:
- Erwärmen des Lebensmittels in einem Hohlraum des Haushaltsgeräts bei einer vollen Heizkapazität (3200) einer Vielzahl von Heizelementen (1100, 1110, 1120), bis eine vorbestimmte Erwärmungstemperatur des Hohlraums erreicht ist;
- Bestimmen einer Lebensmittellast des Lebensmittels;
- Schalten (3400) auf eine Multizyklusleistungssteuerung (8200, 8210, 8220) für die Vielzahl von Heizelementen (1100, 1110, 1120), um eine vorbestimmte Lebensmittelzubereitungstemperatur (3300) des Hohlraums aufrechtzuerhalten,
- wobei
eine vorbestimmte Anzahl der Vielzahl von Heizelementen (1100, 1110, 1120), die der bestimmten Lebensmittellast entspricht, durch die Multizyklusleistungssteuerung (8200, 8210, 8220) aktiviert wird und ein Arbeitszyklus der aktivierten Anzahl von Heizelementen (1100, 1110, 1120) gemäß der bestimmten Lebensmittellast durch die Multizyklusleistungssteuerung (8200, 8210, 8220) angepasst wird;
- Steuern der vorbestimmten Lebensmittelzubereitungstemperatur (3300) des Hohlraums (1500) mit einem Thermostat (1300),
- die Lebensmittellast kann entweder via Benutzereingabe (2310, 2320) oder automatisch eingestellt werden, was durch Bestimmen und Beurteilen des Zeitverlaufs der Temperaturerhöhung von mindestens einem des Hohlraums (1500) und des Lebensmittels während der Erwärmung bestimmt wird.

2. Verfahren (3000) nach Anspruch 1,
wobei der Thermostat (1300) zu der Vielzahl von Heizelementen (1100, 1110, 1120) in Reihe angeordnet ist.

3. Verfahren (3000) nach Anspruch 1, wobei
- die vorbestimmte Lebensmittelzubereitungstemperatur im selben Bereich liegt wie die vorbestimmte Erwärmungstemperatur; bevorzugt plus/minus 5 °C, bevorzugter plus/minus 2 °C, am meisten bevorzugt dieselbe;
- jede der Erwärmungstemperatur und der Lebensmittelzubereitungstemperatur, bevorzugt beide, vom Benutzer eingestellt werden kann.

4. Verfahren (3000) nach einem der Ansprüche 1 bis 3, wobei die Multizyklusleistungssteuerung (8200, 8210, 8220) eine vorbestimmte durchschnittliche Leistung der aktivierten Anzahl von Heizelementen (1100, 1110, 1120), die der bestimmten Lebensmittellast entspricht, steuert, wobei bevorzugt die aktivierte Anzahl von Heizelementen (1100, 1110, 1120) parallel zueinander und in Reihe mit der Multizyklusleistungssteuerung (8200, 8210, 8220) angeordnet sind.

5. Verfahren (3000) nach einem der Ansprüche 1 bis 4, wobei eine niedrigere Masse mit einem niedrigeren Arbeitszyklus verknüpft ist.

6. Verfahren (3000) nach einem der Ansprüche 1 bis 5, wobei der Arbeitszyklus von einem Temperatur-über-ZeitVerhalten (1250, 1260, 1270) bestimmt wird.

7. Temperatursteueranordnung (1000) zum elektrischen Erwärmen eines Lebensmittels in einem Hohlraum (1500) eines Haushaltsgeräts,
**dadurch gekennzeichnet, dass**
die Temperatursteueranordnung (1000) das Verfahren nach einem der Ansprüche 1 bis 6 implementiert hat und mindestens Folgendes umfasst:
- eine Vielzahl von elektrischen Heizelementen (1100, 1110, 1120);
- eine Multizyklusleistungssteuerung (8200) für die Vielzahl von elektrischen Heizelementen (1100, 1110, 1120),
- einen Thermostat (1300);
- entweder eine automatische Lastbeurteilungseinheit (1255) oder eine von einem Benutzer bedienbare Lebensmittellasteingabevorrichtung (2310, 2320), wobei
- der Thermostat (1300) und die Multizyklusleistungssteuerung (8200, 8210, 8220) miteinander in Reihe und mit der Vielzahl von elektrischen Heizelementen (1100, 1110, 1120) in Reihe verbunden sind und
- die jeweilige automatische Lastbeurteilungseinheit (1255) oder die von einem Benutzer bedienbare Lebensmittellasteingabevorrichtung (2310, 2320) mit der Multizyklusleistungssteuerung (8200) verbunden ist und
- die Multizyklusleistungssteuerung (8200, 8210, 8220) angepasst ist, eine Leistung gemäß einem Steuerleistungswert, der von der Lastbeurteilungseinheit (1255) geliefert wird, auszugeben.

8. Temperatursteueranordnung (1000) nach Anspruch 7, wobei die Lastbeurteilungseinheit ein Masseeingabemittel (2320) für die zu erwärmende Lebensmittelmasse umfasst.

9. Temperatursteueranordnung (1000) nach Anspruch 7 oder 8, wobei das Masseeingabemittel (2320) eine Skala umfasst oder wobei die Lastbeurteilungseinheit (1255) ein Mittel zum Beurteilen einer Wärmeträgheit des zu erwärmenden Lebensmittels umfasst, insbesondere wobei die Lastbeurteilungseinheit (1255) angepasst ist, einen Steuerleistungswert in Abhängigkeit von der Lebensmittelmasse/Wärmeträgheit des Lebensmittels bereitzustellen, bevorzugt wobei die Lastbeurteilungseinheit angepasst ist, einen Steuerleistungswert bereitzustellen, der der Lebensmittelmasse/Wärmeträgheit des zu erwärmenden Lebensmittels entspricht.

10. Temperatursteueranordnung (1000) nach einem der Ansprüche 7 bis 9, die ferner ein Thermometer (1260) und einen Timer (1270), der angepasst ist, ein Temperatur-über-Zeit-Verhalten zu bestimmen, umfasst.

11. Temperatursteueranordnung (1000) nach einem der Ansprüche 7 bis 10, wobei die Lastbeurteilungseinheit angepasst ist, einen Neigungswinkel (4550) einer linearen Temperatur-über-Zeit-Steigung zu bestimmen.

12. Temperatursteueranordnung (1000) nach einem der Ansprüche 7 bis 11, wobei die Lastbeurteilungseinheit angepasst ist, einen niedrigeren Steuerleistungswert für einen größeren Neigungswinkel bereitzustellen, insbesondere wobei der Neigungswinkel einer linearen Steigung, die einer Masse von 3 kg entspricht, einem Leistungswert für einen 100%-Arbeitszyklus entspricht.

13. Haushaltsgerät (2000), speziell ein Küchenofen, das eine Temperatursteueranordnung (1000) nach einem der Ansprüche 7 bis 12 umfasst.

14. Verfahren zum Steuern eines Haushaltsgeräts (2000), das ein Verfahren zum elektrischen Erwärmen eines Lebensmittels (3000) nach einem der Ansprüche 1 bis 6 umfasst.

## Revendications

1. Procédé (3000) de chauffage électrique d'un aliment dans un appareil électroménager, comprenant au moins :
- le chauffage de l'aliment à l'intérieur d'une cavité de l'appareil électroménager à une capacité de chauffage maximum (3200) d'une pluralité d'éléments chauffants (1100, 1110, 1120) jusqu'à ce qu'une température de chauffe prédéterminée de la cavité soit atteinte ;
- la détermination d'une charge d'aliment dudit aliment ;
- la commutation (3400) sur une commande de puissance par trains d'alternances (8200, 8210, 8220) de ladite pluralité d'éléments chauffants (1100, 1110, 1120) pour maintenir une température de préparation d'aliment prédéterminée (3300) de la cavité,
- dans lequel
un nombre prédéterminé de ladite pluralité d'éléments chauffants (1100, 1110, 1120) qui correspond à ladite charge d'aliment déterminée est activé par ladite commande de puissance par trains d'alternances (8200, 8210, 8220) et un cycle de service dudit nombre activé d'éléments chauffants (1100,1110, 1120) est ajusté conformément à ladite charge d'aliment déterminée par ladite commande de puissance par trains d'alternances (8200, 8210, 8220) ;
- la commande de ladite température de préparation d'aliment prédéterminée (3300) de la cavité (1500) avec un thermostat (1300),
- la charge d'aliment peut être soit réglée par l'intermédiaire d'une entrée d'utilisateur (2310, 2320), soit déterminée automatiquement durant le chauffage en déterminant et évaluant la durée de l'augmentation de température d'au moins l'un de la cavité (1500) et de l'aliment.

2. Procédé (3000) selon la revendication 1,
dans lequel le thermostat (1300) est agencé en série avec ladite pluralité d'éléments chauffants (1100, 1110, 1120).

3. Procédé (3000) selon la revendication 1, dans lequel
- la température de préparation d'aliment prédéterminée est comprise dans la même plage que ladite température de chauffe prédéterminée ; de préférence plus ou moins 5 °C, encore mieux plus ou moins 2°C, idéalement la même;
- soit la température de chauffe, soit la température de préparation d'aliment, de préférence les deux, peuvent être réglées par l'utilisateur.

4. Procédé (3000) selon l'une quelconque des revendications 1 à 3, dans lequel ladite commande de puissance par trains d'alternances (8200, 8210, 8220) commande une puissance moyenne prédéterminée dudit nombre activé d'éléments chauffants (1100, 1110, 1120) qui correspond à ladite charge d'aliment déterminée,
de préférence dans lequel les éléments dudit nombre activé d'éléments chauffants (1100, 1110, 1120) sont agencés parallèlement les uns aux autres et en série avec la commande de puissance par trains d'alternances (8200, 8210, 8220).

5. Procédé (3000) selon l'une quelconque des revendications 1 à 4, dans lequel une masse inférieure est associée à un cycle de service inférieur.

6. Procédé (3000) selon l'une quelconque des revendications 1 à 5, dans lequel le cycle de service est déterminé à partir d'un comportement de la température dans le temps (1250, 1260, 1270).

7. Agencement de commande de température (1000) pour chauffer électriquement un aliment dans une cavité (1500) d'un appareil électroménager,
**caractérisé en ce que**
ledit agencement de commande de température (1000) met en oeuvre le procédé selon l'une quelconque des revendications 1 à 6 et comprend au moins :
- une pluralité d'éléments chauffants électriques (1100, 1110, 1120) ;
- une commande de puissance par trains d'alternances (8200) de ladite pluralité d'éléments chauffants électriques (1100, 1110, 1120),
- un thermostat (1300);
- soit une unité d'évaluation de charge automatique (1255), soit un dispositif d'entrée de charge d'aliment actionnable par l'utilisateur (2310, 2320), dans lequel
- le thermostat (1300) et la commande de puissance par trains d'alternances (8200, 8210, 8220) sont connectés en série l'un à l'autre, et en série avec la pluralité d'éléments chauffants électriques (1100, 1110, 1120) ; et
- l'unité d'évaluation de charge automatique respective (1255) ou le dispositif d'entrée de charge d'aliment actionnable par l'utilisateur respectif (2310, 2320) est connecté à la commande de puissance par trains d'alternances (8200) ; et
- la commande de puissance par trains d'alternances (8200, 8210, 8220) est adaptée pour produire une puissance conformément à une valeur de puissance de régulation fournie par l'unité d'évaluation de charge (1255).

8. Agencement de commande de température (1000) selon la revendication 7, dans lequel l'unité d'évaluation de charge comprend un moyen d'entrée de charge (2320) de la masse d'aliment à chauffer.

9. Agencement de commande de température (1000) selon la revendication 7 ou 8, dans lequel le moyen d'entrée de charge (2320) comprend une tare, ou dans lequel l'unité d'évaluation de charge (1255) comprend un moyen pour évaluer une inertie thermique de l'aliment à chauffer, en particulier dans lequel l'unité d'évaluation de charge (1255) est adaptée pour fournir une valeur de puissance de régulation dépendant de la masse d'aliment/l'inertie thermique,
de préférence dans lequel l'unité d'évaluation de charge est adaptée pour fournir une valeur de puissance de régulation correspondant à la masse d'aliment/l'inertie thermique de l'aliment à chauffer.

10. Agencement de commande de température (1000) selon l'une quelconque des revendications 7 à 9, comprenant en outre un thermomètre (1260) et une minuterie (1270) adaptés pour déterminer un comportement de la température dans le temps.

11. Agencement de commande de température (1000) selon l'une quelconque des revendications 7 à 10, dans lequel l'unité d'évaluation de charge est adaptée pour déterminer un angle d'inclinaison (4550) d'une pente linéaire de la température dans le temps.

12. Agencement de commande de température (1000) selon l'une quelconque des revendications 7 à 11, dans lequel l'unité d'évaluation de charge est adaptée pour fournir une valeur de puissance de régulation inférieure pour un angle d'inclinaison plus grand, en particulier dans lequel l'angle d'inclinaison d'une pente linéaire correspondant à une masse de 3 kg correspond à une valeur de puissance d'un cycle de service de 100 %.

13. Appareil électroménager (2000), notamment un four de cuisine, comprenant un agencement de commande de température (1000) selon l'une quelconque des revendications 7 à 12.

14. Procédé de commande d'un appareil électroménager (2000) comprenant un procédé de chauffage électrique d'un aliment (3000) selon l'une quelconque des revendications 1 à 6.
